**Europäisches Patentamt**

**European Patent Office**

**Office européen des brevets**

(11) Numéro de publication : **0 428 443 B1**

## (12) FASCICULE DE BREVET EUROPEEN

(45) Date de publication du fascicule du brevet :
**15.09.93 Bulletin 93/37**

(51) Int. Cl.⁵ : **G01B 17/02, G01N 29/00**

(21) Numéro de dépôt : **90403184.6**

(22) Date de dépôt : **09.11.90**

(54) **Dispositif et sonde pour mesurer la variation de distance séparant les deux faces d'une couche de matière au moyen d'ultrasons.**

(30) Priorité : **14.11.89 FR 8914927**

(43) Date de publication de la demande :
**22.05.91 Bulletin 91/21**

(45) Mention de la délivrance du brevet :
**15.09.93 Bulletin 93/37**

(84) Etats contractants désignés :
**DE GB**

(56) Documents cités :
**FR-A- 2 351 420**
**FR-A- 2 476 831**
**US-A- 4 287 769**

(73) Titulaire : **AEROSPATIALE SOCIETE
NATIONALE INDUSTRIELLE Société
Anonyme dite:
37, Boulevard de Montmorency
F-75016 Paris (FR)**

(72) Inventeur : **Le Floc'h, Christian Marcel
Résidence Dulamon
F-33290 Blanquefort (FR)**
Inventeur : **Perrot, François
4bis rue Colbert
F-33160 LE HAILLAN (FR)**

(74) Mandataire : **Bonnetat, Christian
CABINET BONNETAT 23, Rue de
St.Pétersbourg
F-75008 Paris (FR)**

EP 0 428 443 B1

Jouve, 18, rue Saint-Denis, 75001 PARIS

## Description

La présente invention concerne une sonde pour mesurer la variation de distance séparant les deux faces d'une couche de matière au moyen d'ultrasons.

Par exemple, par le document FR-A-2 351 420, on connaît déjà une sonde pour mesurer la variation de la distance séparant les deux faces d'une couche de matière solide au moyen d'ultrasons parcourant transversalement ladite couche, comportant :

- un transducteur électroacoustique émetteur, susceptible de convertir un premier signal électrique alternatif en une onde ultrasonore de même fréquence fixe dont l'amplitude varie de façon alternative en fonction du temps, ladite onde ultrasonore et ledit premier signal électrique étant dans une relation de phase fixe ;
- des premiers moyens pour appliquer ladite onde ultrasonore à ladite couche de matière ;
- un transducteur électroacoustique récepteur susceptible de convertir l'onde ultrasonore traversant ladite couche de matière, en un second signal électrique alternatif en relation de phase fixe avec ladite onde ;
- des seconds moyens pour appliquer audit transducteur électroacoustique récepteur ladite onde ultrasonore ayant traversé ladite couche de matière, lesdits premiers et seconds moyens d'application étant disposés d'un même côté de ladite couche de matière ;
- des premiers moyens de liaison pour pouvoir relier ledit transducteur électroacoustique émetteur à un générateur dudit premier signal électrique alternatif ; et
- des seconds moyens de liaison pour pouvoir relier ledit transducteur électroacoustique récepteur à des moyens susceptibles de mesurer en continu la variation du déphasage dudit second signal électrique par rapport audit premier signal électrique,

La présente invention a pour objet une sonde de ce type, perfectionnée pour en rendre l'usage plus commode.

A cette fin, selon l'invention, la sonde du type rappelé ci-dessus est caractérisée en ce que :

- lesdits premiers moyens d'application de l'onde ultrasonore sont formés par un premier guide d'ondes ultrasonores rigide, disposé de façon que l'une de ses extrémités est reliée audit transducteur électroacoustique émetteur, tandis que l'autre de ses extrémités est libre pour pouvoir être amenée au contact d'une face accessible de ladite couche de matière ; et
- lesdits seconds moyens d'application de l'onde ultrasonore sont formés par un second guide d'ondes ultrasonores rigide, disposé de façon que l'une de ses extrémités est reliée audit transducteur électroacoustique récepteur, tandis que l'autre de ses extrémités est libre pour pouvoir être amenée, comme l'extrémité libre dudit premier guide d'ondes, au contact de ladite même face accessible de ladite couche de matière.

Ainsi il est possible d'éviter l'usage d'un bain de liquide de couplage, tout en permettant de mesurer ladite variation de distance en n'approchant ladite couche que d'un seul côté, l'autre côté pouvant être inaccessible ou être le lieu de conditions défavorables.

On remarquera que, dans la sonde de l'invention, l'onde ultrasonore incidente, après avoir traversé ladite couche de matière dans un sens, se réfléchit sur la face de ladite couche de matière opposée, pour retraverser cette couche en sens inverse et atteindre ledit transducteur électroacoustique récepteur.

On remarquera de plus que, dans la sonde de l'invention, il est aisé de rassembler lesdits transducteurs électroacoustiques émetteur et récepteur, ainsi que lesdits premiers et seconds moyens de couplage dans un boîtier pour former une unité directement applicable contre une face de ladite couche de matière.

Ainsi, la variation d'épaisseur de ladite couche de matière peut être mesurée en appliquant ladite sonde contre une face accessible de cette couche, même si l'autre face est soumise à des conditions thermiques élevées. Il est utile de noter que, grâce aux guides d'ondes ultrasonores solides, lesdits transducteurs électroacoustiques sont éloignés de ladite couche de matière, de sorte qu'ils sont protégés contre les conditions thermiques défavorables pouvant se trouver du côté de la face inaccessible de la couche de matière. Bien entendu, ces guides d'ondes peuvent être, à cet effet, réalisés en matière réfractaire ; ils sont par exemple formés par des barreaux d'une telle matière réfractaire.

Avantageusement, ladite sonde comporte un boîtier enfermant lesdits transducteurs électroacoustiques émetteur et récepteur, ainsi que lesdits premier et second guides d'onde ultrasonore rigides, ledit boîtier étant traversé par lesdits premiers et seconds moyens de liaison. Dans ce cas, les extrémités libres desdits guides d'onde ultrasonore rigides, opposées auxdits transducteurs électroacoustiques émetteur et récepteur, sont accessibles à l'extérieur dudit boîtier, pour pouvoir être couplées à ladite même face accessible de ladite couche de matière.

Le couplage entre lesdites extrémités libres desdits guides d'onde ultrasonore rigides et ladite même face accessible de la couche de matière peut être obtenu par simple contact. Toutefois, de préférence, on prévoît des scellements temporaires desdites extrémités libres sur ladite même face, par exemple à l'aide d'un ciment. Si ladite couche de matière est soumise, sur sa face opposée à ladite même face, à des températures élevées, lesdits scellements peuvent être réalisés à l'aide de ciment réfractaire.

De tels scellements temporaires assurent une bonne transmission de l'onde ultrasonore entre lesdits guides d'onde rigides et ladite couche de la matière.

Pour augmenter encore la qualité du couplage ultrasonore entre le sonde et la couche de matière à examiner, on peut prévoir, isolément mais de préférence en combinaison, les particularités suivantes :

- ledit boîtier comporte une extrémité susceptible de venir au contact de ladite même face accessible de la couche de matière, lorsque lesdites extrémités libres accessibles desdits guides d'onde ultrasonore rigides sont couplées à ladite même face accessible et, de plus, lesdits transducteurs électroacoustiques émetteur et récepteur sont au contact dudit boîtier ;
- des moyens de fixation sont prévus pour fixer ladite extrémité dudit boîtier sur ladite même face accessible de la couche de matière ;
- lesdits transducteurs électroacoustiques émetteur et récepteur, ainsi que lesdits premier et second guides d'onde ultrasonore rigides sont noyés, à l'intérieur dudit boîtier, dans une masse de matière absorbant les ondes ultrasonores.

Cette dernière particularité permet d'assurer une grande rigidité entre les divers éléments de la sonde, tout en évitant un couplage parasite entre le côté émetteur et le côté récepteur de celle-ci.

Il est avantageux que lesdites extrémités libres accessibles desdits guides d'onde ultrasonore rigides fassent saillie à l'extérieur de ladite masse de matière absorbant les ondes ultrasonores, cette masse ménageant un espace libre entre son front et ladite même face de la couche de matière. On obtient ainsi un espace tampon entre ladite couche de matière et l'intérieur de la sonde, particulièrement utile lorsque la sonde est destinée à examiner une couche de matière soumise, sur sa face opposée à la sonde, à des températures élevées. Dans ce cas, il est avantageux que ladite masse de matière absorbant des ondes ultrasonores, ainsi que lesdits guides d'ondes ultrasonores soient en matières réfractaires. Pour protéger au maximum lesdits transducteurs électroacosutiques émetteur et récepteur contre les températures élevées, il est alors préférable de disposer ceux-ci, à l'intérieur dudit boîtier, au voisinage de l'extrémité de celui-ci opposée à ladite extrémité venant au contact de ladite même face, de la couche de matière.

Dans la sonde conforme à l'invention, on peut utiliser des transducteurs connus de type piézo-électrique, ferro-électrique ou analogues, de sorte que lesdits premier et second signaux sont en phase avec l'onde ultrasonore. On obtient donc des "relations de phase fixe" particulièrement avantageuses. Toutefois, une telle disposition n'est pas obligatoire et l'on pourrait mettre en oeuvre l'invention avec des premier et second signaux déphasés par rapport à l'onde ultrasonore, à la condition que les déphasages correspondants soient connus.

Par ailleurs, il est avantageux que ledit premier signal électrique alternatif de fréquence fixe soit du type sinusoïdal. De plus, afin de pouvoir effectuer des mesures de variation de distance supérieures à la longueur d'onde de l'onde ultrasonore (égale à la période dudit premier signal), on prévoit des moyens pour compter les passages par $2k\pi$ de ladite variation de déphasage, $k$ étant un nombre entier égal à 1, 2, 3..., (n-1), n.

On remarquera que l'invention peut être mise en oeuvre pour mesurer les variations d'épaisseur de ladite couche de matière solide, quelle que soit la nature de celle-ci et quel que soit le processus par lequel varie ladite épaisseur. Cette variation d'épaisseur peut résulter d'une abrasion ou d'un dépôt sur une face de ladite couche.

Les figures du dessin annexé feront bien comprendre comment l'invention peut être réalisée. Sur ces figures, des références identiques désignent des éléments semblables.

La figure 1 est le schéma synoptique d'un mode de réalisation de la sonde selon l'invention.

Les figures 2a, 2b et 2c sont des diagrammes temporels illustrant le fonctionnement de la sonde de la figure 1.

La figure 3 montre schématiquement un mode de réalisation pratique de la sonde conforme à l'invention.

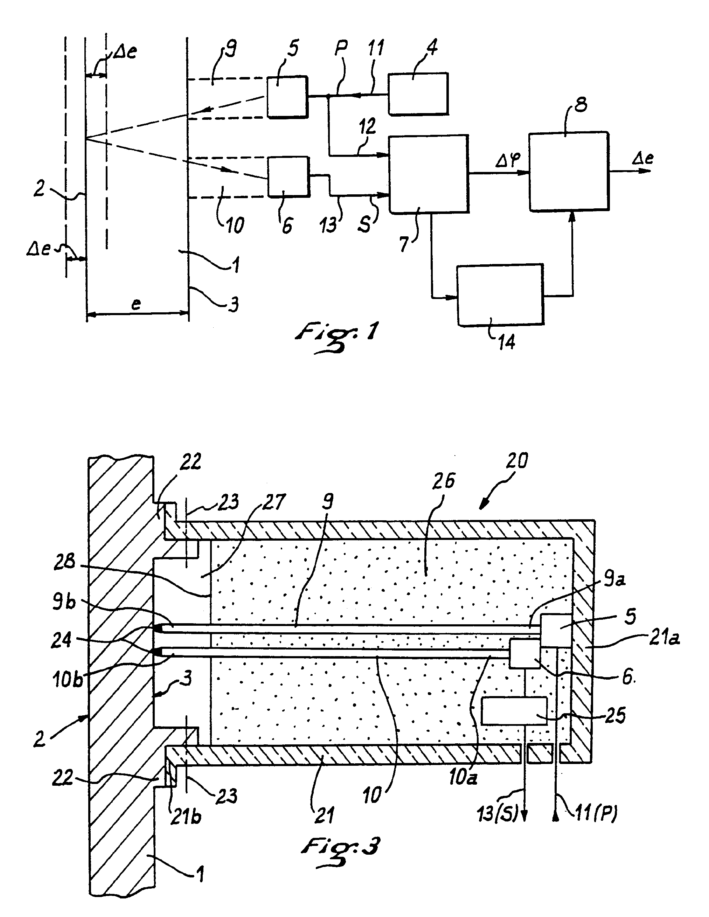

La sonde selon l'invention, illustrée schématiquement sur la figure 1, est destinée à mesurer la variation $\Delta e$ de l'épaisseur $e$ d'une couche de matière solide 1, délimitée par deux faces opposées 2 et 3. Par exemple, la variation d'épaisseur $\Delta e$ peut résulter d'un dépôt s'effectuant sur la couche de matière solide 1 (l'épaisseur $e$ croît) ou bien d'une usure de ladite couche (alors l'épaisseur $e$ décroît).

De plus, cette variation d'épaisseur résulte de l'évolution d'une seule 2, desdites faces par rapport à une position initiale, l'autre 3 desdites face étant invariable.

Le système de la figure 1 comporte un générateur de courant sinusoïdal 4, deux transducteurs électroacoustiques 5 et 6, par exemple de type piézo-électrique ou ferro-électrique, un phasemètre 7 ou analogue et des moyens de calcul 8.

Les transducteurs électroacoustiques 5 et 6 sont disposés du côté de la face invariable 3 de la couche de matière solide 1, au voisinage l'un de l'autre. Le transducteur 5 est couplé acoustiquement à ladite face invariable 3 par un guide d'onde solide 9. De façon analogue, le couplage acoustique entre le transducteur 6 et la face 3, est réalisé par un guide d'onde solide 10.

Le signal électrique sinusoïdal P de période $\lambda$, émis par le générateur 4 est appliqué par une liaison 11, au transducteur 5. En réponse à une telle excitation, le transducteur 5 émet une onde ultrasonore sinusoïdale de fréquence 1/λ, en phase avec ledit signal électrique P. Par l'intermédiaire du guide d'onde 9, cette onde ultrasonore sinusoïdale est appliquée, par la face 3, à la couche de matière 1, qu'elle traverse pour venir se réfléchir sur la face 3, de sorte qu'elle est amenée à retraverser ladite couche de matière 1 en sens inverse, en direction du guide d'onde 10. Au cours de cette double traversée de la couche de matière 1, l'onde ultrasonore subit un déphasage qui est proportionnel à l'épaisseur e doublement traversée. Par suite, l'onde ultrasonore transmise par le guide d'onde 10 au transducteur récepteur 6 est déphasée par rapport à l'onde ultrasonore engendrée par le transducteur 5 d'un angle

$$(1) \qquad \phi = 2k.e,$$

k étant une constante égale au nombre d'onde $2\pi/\lambda$. En effet, un déphasage $\phi$ égale à $2\pi$ correspond à une épaisseur 2e égale à λ (voir la figure 2b).

Le transducteur 6, recevant l'onde ultrasonore ayant traversé la couche 1, émet un signal électrique sinusoïdal S, de période λ, en phase avec cette onde ultrasonore qu'il reçoit. Il en résulte que le signal électrique sinusoïdal S émis par le transducteur récepteur 6 est déphasé de $\phi$ par rapport au signal électrique sinusoïdal P émis par le générateur 4.

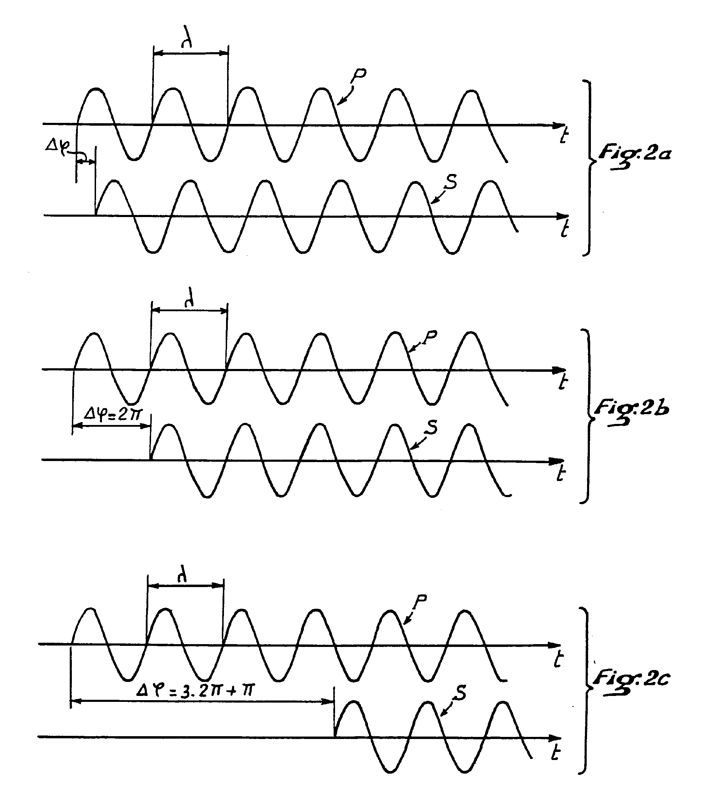

Ainsi, le déphasage du signal S par rapport au signal P (voir la figure 2a) est représentatif du double de l'épaisseur e de la couche 1.

Si l'épaisseur e varie d'une petite quantité $\Delta e$ (en plus ou en moins), il en résulte une variation de déphasage $\Delta\phi$, telle que

$$(2) \qquad \Delta\phi = 4\pi/\lambda.\Delta e$$

Pour obtenir cette valeur $\Delta\phi$, dans le système de la figure 1, on applique les signaux P et S, respectivement par les liaisons 12 et 13, au phasemètre 7, qui délivre la variation de déphasage correspondante à sa sortie. Les moyens de calcul 8, recevant cette variation de déphasage, calculent la variation d'épaisseur $\Delta e$ correspondante par la formule :

$$(3) \qquad \Delta e = \lambda/4\pi . \Delta\phi$$

La variation d'épaisseur $\Delta e$ est donc disponible à la sortie desdits moyens de calcul 8.

Il ressort de ce qui précède que la présente invention a de nombreux avantages :

a) la mesure de variation d'épaisseur $\Delta e$ est très précise et ne dépend que de la précision de la mesure de $\Delta\phi$. Si, par exemple, la précision de mesure de $\Delta\phi$ est égale à 1°, alors la précision de mesure de $\Delta e$ est de $\lambda/360$. Si la précision de mesure de $\Delta\phi$ est de 0,1°, celle de $\Delta e$ est égale à $\lambda/3600$. La longueur d'onde λ étant par exemple choisie entre 5 mm et 20 mm, on voit donc que la précision sur la détermination de $\Delta e$ peut être de quelques μm.

b) la dynamique de la mesure est très grande, car la variation $\Delta e$ peut être aussi grande que désirée, quelle que soit la valeur de λ. Il suffit que le phasemètre 7 (ou des moyens de comptage extérieurs 14) enregistre les passages de $\Delta\phi$ à $2\pi$. Par exemple, (voir la figure 2c) si avec une valeur de λ égale à 10 mm, on mesure une variation de déphasage $\Delta\phi$ égale à 3 fois $2\pi$ augmentée de $\pi$, cela signifie que :

$$\Delta e = \frac{\lambda}{4\pi}(3.2\,\pi + \pi) = \frac{7}{4}\lambda = 17,5\ mm$$

La variation $\Delta e$ peut donc être supérieure à λ.

c) la numérisation de la mesure peut se faire avec un nombre de bits relativement faible, puiqu'il suffit, à chaque mesure, de coder la différence de phase $\Delta\phi$ et le nombre k représentant les passages par $2k\pi$ de $\Delta\phi$. Il n'y a aucun bit à prévoir pour des traitements annexes de signal, tels que autocorrélation, filtrage, etc...

d) la linéarité de la mesure est assurée du fait que l'on opère à fréquence fixe.

Sur la figure 3, on a représenté un mode de réalisation pratique 20 d'une sonde pour le dispositif de la figure 1, par exemple destinée à la mesure du recul par ablation thermique de la face externe 2 de la couche 1. Cette couche 1 peut être par exemple la paroi du nez d'une navette spatiale lors de sa rentrée dans l'atmosphère. Un tel nez est par exemple réalisé en matériau thermomécanique à structure ablative (par exemple un matériau carbone/carbone, dont l'épaisseur est de l'ordre de 10 mm). Les mesures d'ablation sont effectuées lors d'essais expérimentaux en vol et permettent de vérifier les calculs de résistance du matériau à hautes températures. De telles mesures d'épaisseur de la paroi 1 du nez sont difficiles à effectuer dans un environnement perturbé. En effet, la température sur la face extérieure 2 de la paroi 1 peut s'élever jusqu'à 2000°C.

Comme on peut le voir, la sonde 20 selon l'invention comporte les éléments 5, 6, 9 et 10 mentionnés ci-dessus, enfermés dans un boîtier 21 destiné à être fixé sur la face interne invariable 3 de la paroi 1 du nez de la navette spatiale. A cet effet, on prévoit des renforts 22 dans ladite paroi.

Ledit boîtier 21 présente la forme d'un cylindre fermé à l'une de ses extrémités par un fond 21a et ouvert à son autre extrémité 21b, destinée à être fixée sur la paroi 1. Les transducteurs 5 et 6 sont disposés au voisinage du fond 21a (éloigné de la paroi 1) dudit boîtier 21 et sont reliés aux extrémités respectives correspondantes 9a et 10a des guides d'onde 9 et 10. Les extrémités opposées 9b et 10b desdits guides d'ondes, destinées à être couplées à la paroi 1, sont accessibles dans l'ouverture dudit boîtier 21.

Pour l'application envisagée ci-dessus, le boîtier 21 doit:

- résister à des températures élevées (de l'ordre de 1500°C sur la face intérieure invariable 3 du nez de la navette ) ;

- résister à des vibrations importantes et à un contexte dynamique difficile ;
- avoir un poids minimal.

Pour répondre à ces critères, le boîtier 21 est par exemple réalisé par usinage dans un bloc cylindrique en matériau composite, comprenant une armature tissée en trois dimensions de fibres de silice et une matrice en résine phénolique. L'épaisseur de la paroi du boîtier 21 est par exemple comprise entre 4 et 8 mm et son diamètre intérieur peut être de l'ordre de 50 mm.

Des vis de fixation, simplement représentées par leurs axes 23 et réalisées en matériau thermostructurel du type céramique composite (SiC/SiA$\ell$ YoN ou SiC/Si$_3$ N$_4$), sont prévues pour fixer le boîtier 21 sur les renforts 22.

Compte tenu de l'environnement thermique d'une telle sonde, il est nécessaire de découpler thermiquement les transducteurs 5 et 6 de la paroi 1. Ceci est obtenu par le fait que les deux transducteurs ultrasonores 5 et 6 sont raccordés à la face interne invariable 3 de la paroi 1 par l'intermédiaire des guides d'ondes 9 et 10, réalisés à cet effet en matériau réfractaire transparent aux ondes acoustiques, par exemple en silice, en alumine, ou en tungstène.

Les deux guides d'ondes 9 et 10, agencés de façon sensiblement parallèle l'un à l'autre, sont couplés à la face interne invariable 3 de la paroi 1 du nez par des scellements temporaires de ciment réfractaire 24, qui assurent un excellent couplage acoustique entre ladite paroi 1 et les extrémités 9b et 10b desdits guides d'ondes.

La longueur des guides d'ondes 9 et 10 est calculée et déterminée de manière à limiter la température à moins de 300°C au niveau des transducteurs 5 et 6. Cette longueur, pour l'application envisagée ci-dessus, peut être de l'ordre de 100 mm, et elle est liée :

    . au flux thermique, et
    . à la conductivité thermique du matériau desdits guides d'ondes.

Chaque guide d'onde 9 et 10 peut se présenter comme une barre cylindrique pleine de silice, alumine ou tout autre matériau réfractaire transparent aux ondes acoustiques. Son diamètre (par exemple 2 mm) doit être compatible avec la longueur d'onde ultrasonore utilisée (par exemple 10 mm).

La liaison mécanique entre les guides d'ondes 9 et 10 et la paroi 2, assurée par les scellements de ciment réfractaire 24, est complétée par l'appui du boîtier 21 fixé à ladite paroi par son extrémité 21b, contre les transducteurs 5 et 6, ce qui procure une tenue mécanique supplémentaire par empilage.

Les deux transducteurs 5 et 6 sont positionnés de telle manière que leurs axes acoustiques soient décalés au maximum de 4 à 5 mm, de façon à améliorer l'efficacité de la réception de l'onde ultrasonore au niveau de l'extrémité des guides d'onde acoustiques.

Le transducteur récepteur 6 peut être raccordé à un bloc 25 comportant un préamplificateur, qui peut être intégré dans le boîtier 21. Les liaisons électriques 11 et 13, au générateur 4 et au phasemètre 7 extérieurs au boîtier 21, traversent ledit boîtier et sont isolées par des gaines réfractaires de silice (non représentées) devant résister à des températures pouvant atteindre 300°C dans la zone desdits transducteurs.

Chaque transducteur 5, 6 peut être couplé acoustiquement et mécaniquement au guide d'onde correspondant 9, 10 par collage sur l'extrémité respective 9a, 10a.

L'ensemble des guides d'ondes 9,10, des transducteurs 5,6 et de l'éventuel préamplificateur 15 est moulé dans un bloc de mousse réfractaire 26 injectée à l'intérieur du boîtier 21 et destinée à absorber les vibrations. De plus, les pores de cette mousse assurent un découplage acoustique entre les deux guides d'ondes 9,10, évitant ainsi tous risques de diaphonie entre la partie émettrice et la partie réceptrice de la sonde 20.

Le remplissage du boîtier 21 par la mousse réfractaire 26 n'est pas complet, de manière à ménager un espace 27 entre le front 28 du bloc de mousse 26 et la face interne invariable 3 de la paroi 1. Cet espace 27, formant une chambre isolante, est fonction des caractéristiques de la mousse utilisée, de la paroi de propagation thermique et du temps de vol de la navette. Par exemple pour une mousse réfractaire en laine frittée (quartz-silice) l'espace 27 est tel que la distance entre face interne 3 et le front 28 soit de l'ordre de 10 mm.

## Revendications

1. Sonde pour mesurer la variation ($\Delta$e) de la distance (e) séparant les deux faces (2,3) d'une couche (1) de matière solide au moyen d'ultrasons parcourant transversalement ladite couche (1), comportant :

    - un transducteur électroacoustique émetteur (5), susceptible de convertir un premier signal électrique alternatif (P) en une onde ultrasonore de même fréquence fixe dont l'amplitude varie de façon alternative en fonction du temps, ladite onde ultrasonore et ledit premier signal électrique étant dans une relation de phase fixe ;

    - des premiers moyens pour appliquer ladite onde ultrasonore à ladite couche de matière (1) ;

    - un transducteur électroacoustique récepteur (6) susceptible de convertir l'onde ultrasonore traversant ladite couche de matière (1), en un second signal électrique alternatif (S) en relation de phase fixe avec ladite onde ;

- des seconds moyens pour appliquer audit transducteur électroacoustique récepteur (6) ladite onde ultrasonore ayant traversé ladite couche de matière, lesdits premiers et seconds moyens d'application étant disposés d'un même côté de ladite couche de matière (1) ;
- des premiers moyens de liaison (11) pour pouvoir relier ledit transducteur électroacoustique émetteur (5) à un générateur (4) dudit premier signal électrique alternatif (P) ; et
- des seconds moyens de liaison (13) pour pouvoir relier ledit transducteur électroacoustique récepteur (6) à des moyens (7) susceptibles de mesurer en continu la variation du déphasage dudit second signal électrique (S) par rapport audit premier signal électrique (P),
caractérisée en ce que :
- lesdits premiers moyens d'application de l'onde ultrasonore sont formés par un premier guide d'ondes ultrasonores rigide (9), disposé de façon que l'une (9a) de ses extrémités est reliée audit transducteur électroacoustique émetteur (5), tandis que l'autre (9b) de ses extrémités est libre pour pouvoir être amenée au contact d'une face accessible (3) de ladite couche de matière (1) ; et
- lesdits seconds moyens d'application de l'onde ultrasonore sont formés par un second guide d'ondes ultrasonores rigide (10), disposé de façon que l'une (10a) de ses extrémités est reliée dudit transducteur électroacoustique récepteur (6), tandis que l'autre (10b) de ses extrémités est libre pour pouvoir être amenée, comme l'extrémité libre (9b) dudit premier guide d'ondes (9), au contact de ladite même face accessible (3) de ladite couche de matière (1).

2. Sonde selon la revendication 1,
caractérisée en ce qu'elle comporte un boîtier (21) enfermant lesdits transducteurs électroacoustiques émetteur (5) et récepteur (6), ainsi que lesdits premier et second guides d'ondes ultrasonores rigides (9 et 10), ledit boîtier (21) étant traversé par lesdits premiers et seconds moyens de liaison (11 et 13).

3. Sonde selon la revendication 2,
caractérisée en ce que les extrémités libres (9b,10b) desdits guides d'ondes ultrasonores rigides (9,10), opposées auxdits transducteurs électroacoustiques émetteur (5) et récepteur (6), sont accessibles à l'extérieur dudit boîtier (21), pour pouvoir être couplées à ladite même face acessible (3) de ladite couche de matière (1).

4. Sonde selon la revendication 3,
caractérisée en ce que le couplage entre lesdites extrémités libres (9b,10b) desdits guides d'ondes rigides et ladites même face accessible (3) de ladite couche de matière (1) comporte des scellements temporaires (24) desdites extrémités (9b,10b) sur ladite même face accessible (3).

5. Sonde selon la revendication 3,
caractérisée en ce que ledit boîtier (21) comporte une extrémité (21a) susceptible de venir au contact de ladite même face accessible (3) de la couche de matière (1), lorsque lesdites extrémités libres accessibles (9b,10b) desdits guides d'ondes ultrasonores rigides (9,10) sont couplées à ladite même face acessible (3) et en ce que lesdits transducteurs électroacoustiques émetteur (5) et récepteur (6) sont au contact dudit boîtier (21).

6. Sonde selon la revendication 5,
caractérisée en ce qu'elle comporte des moyens de fixation (23) pour fixer ladite extrémité (21b) dudit boîtier (21) sur ladite même face accessible (3) de la couche de matière (1).

7. Sonde selon l'une des revendications 1 à 6,
caractérisée en ce que lesdits transducteurs électroacoustiques émetteur (5) et récepteur (6), ainsi que lesdits premier et second guides d'ondes ultrasonores rigides (9 et 10) sont noyés, à l'intérieur dudit boîtier (21) dans une masse (26) de matière absorbant les ondes ultrasonores.

8. Sonde selon la revendication 9,
caractérisée en ce que lesdites extrémités libres accessibles (9b,10b) desdits guides d'ondes ultrasonores rigides font saillie à l'extérieur de ladite masse (26) de matière absorbant les ondes ultrasonores, cette masse (26) ménageant un espace libre (27) entre son front (28) et ladite même face (3) de la couche de matière (1).

9. Sonde selon l'une des revendications 7 ou 8,
caractérisée en ce que ladite masse (26) de matière absorbant les ondes ultrasonores, ainsi que lesdits guides d'ondes ultrasonores (9,10) sont en matières réfractaires.

10. Sonde selon l'une des revendications 3 à 9,
caractérisée en ce que lesdits transducteurs électroacoustiques émetteur (5) et récepteur (6) sont disposés, à l'intérieur dudit boîtier (21), au voisinage de l'extrémité de celui-ci opposée à ladite extrémité (21a) venant au contact de ladite même face (3) de la couche de matière (1).

11. Sonde selon l'une de revendications 1 à 10, caractérisée en ce que ledit premier signal électrique (P) est sinusoïdal.

12. Sonde selon l'une des revendications 1 à 11, caractérisée en qu'elle est associée à des moyens (7,14) pour compter les passages par $2k\pi$ de ladite variation de déphasage ($\Delta\phi$), $\underline{k}$ étant un nombre entier égal à 1, 2, 3,..., (n-1), n.

**Patentansprüche**

1. Sonde zur Messung der Abweichung ($\Delta$e) des Abstands (e) zwischen zwei Flächen (2, 3) einer festen Materialschicht (1) mittels Ultraschall, der quer die besagte Schicht (1) durchfließt, wobei die Sonde folgendes enthält:
   - einen elektro-akustischen Emitter-Wandler (5), zum Umwandeln eines ersten elektrischen Wechselsignals (P) in eine Ultraschallwelle von gleicher Festfrequenz, deren Amplitude sich wechselweise zeitabhängig verändert, wobei die besagte Ultraschallwelle und das besagte erste elektrische Signal sich in einer festen Phasenbeziehung befinden;
   - erste Mittel zum Ansetzen der besagten Ultraschallwelle auf besagte Materialschicht (1);
   - einen elektro-akustischer Empfänger-Wandler (6) zum Umwandeln der Ultraschallwelle, welche die Materialschicht (1) durchdringt, in ein zweites elektrisches Wechselsignal (S), das sich in einer festen Phasenbeziehung mit der besagten Welle befindet;
   - zweite Mittel zum Ansetzen an den besagten elektroakustischen Empfänger-Wandler (6) der besagten Ultraschallwelle, die besagte Materialschicht durchdrungen hat, wobei die besagten ersten und zweiten Ansetzmittel auf einer gleichen Seite der besagten Materialschicht (1) angeordnet sind;
   - erste Verbindungsmittel (11) zum Verbinden des besagten elektro-akustischen Emitter-Wandlers (5) an einen Generator (4) für das besagte erste elektrische Wechselsignal (P); und
   - zweite Verbindungsmittel (13) zum Verbinden des besagten elektro-akustische Empfänger-Wandlers (6) an Mittel (7) zum kontinuierlichen Messen der Phasenverschiebungsveränderungen des besagten zweiten elektrischen Signals (S) gegenüber dem besagten ersten elektrischen Signal (P), dadurch gekennzeichnet, daß:

   - die ersten Ansetzmittel der Ultraschallwelle durch einen ersten starren Ultraschallwellenleiter (9) gebildet sind, welcher so angeordnet ist, daß das eine (9a) seiner Enden mit dem besagten elektro-akustischen Emitter-Wandler (5) verbunden ist, während das andere (9b) seiner Enden frei ist, um in Kontakt mit einer zugänglichen Fläche (3) der besagten Materialschicht (1) gebracht zu werden; und
   - die besagten zweiten Ansetzmittel der Ultraschallwelle durch einen zweiten starren Ultraschallwellenleiter (10) gebildet sind, welcher so angeordnet ist, daß das eine (10a) seiner Enden mit dem besagten elektro-akustischen Empfänger-Wandler (6) verbunden ist, während das andere (10b) seiner Enden frei ist, um wie das frei Ende (9b) des besagten ersten Wellenleiters (9), in Kontakt mit der besagten gleichen zugänglichen Fläche (3) der besagten Materialschicht (1) gebracht zu werden.

2. Sonde nach dem Anspruch 1, dadurch gekennzeichnet, daß sie ein Gehäuse (21) enthält, in welchem die besagten elektro-akustischen Emitter-Wandler (5) und Empfänger-Wandler (6) sowie die besagten ersten und zweiten starren Ultraschallwellenleiter (9 und 10) untergebracht sind, wobei das besagte Gehäuse (21) durch die ersten und zweiten Verbindungsmittel (11 und 13) durchquert wird.

3. Sonde nach dem Anspruch 2, dadurch gekennzeichnet, daß die freien Enden (9b, 10b) der besagten starren Ultraschallwellenleiter (9, 10), die den besagten elektro-akustischen Emitter-Wandler (5) und Empfängerwandler (6) gegenüberliegen, außerhalb des besagten Gehäuses (21) zugänglich sind, um an die besagte gleiche zugängliche Fläche (3) der besagten Materialschicht (1) gekoppelt zu werden.

4. Sonde nach dem Anspruch 3, dadurch gekennzeichnet, daß die Kopplung zwischen den besagten freien Enden (9b, 10b) der besagten starren Wellenleiter und der besagten gleichen zugänglichen Fläche (3) der besagten Materialschicht (1) zeitliche Verschließungen (24) der besagten Enden (9b, 10b) auf der besagten gleichen zugänglichen Fläche (3) enthalten.

5. Sonde nach dem Anspruch 3, dadurch gekennzeichnet, daß das besagte Gehäuse (21) ein Ende (21a) aufweist, das in Kontakt mit der besagten gleichen zugänglichen Fläche (3) der Materialschicht (1) kommt, wenn die besagten zugänglichen freien Flächen (9b, 10b) der besagten starren Ultraschallwellenleiter (9, 10) mit der besagten gleichen zugänglichen Fläche (3) gekoppelt sind und daß die besagten elektro-akustischen Emitter-Wandler (5) und Empfänger-Wandler (6) in Kontakt mit dem besagten Gehäuse (21) sind.

6. Sonde nach dem Anspruch 5,
dadurch gekennzeichnet, daß sie Befestigungsmittel (23) enthält zur Befestigung des besagten Endes (21b) des besagten Gehäuses (21) an die besagte gleiche zugängliche Fläche (3) der Materialschicht (1).

7. Sonde nach einem der Ansprüche 1 bis 6,
dadurch gekennzeichnet, daß die besagten elektroakustischen Emitter-Wandler (5) und Empfänger-Wandler (6) sowie die besagten ersten und zweiten starren Ultraschallwellenleiter (9 und 10) im Innern des besagten Gehäuses (21) in einer Masse (26) von Material, das die Ultraschallwellen absorbiert, getaucht sind.

8. Sonde nach dem Anspruch 9,
dadurch gekennzeichnet, daß die besagten zugänglichen freien Enden (9b, 10b) der besagten starren Ultraschallwellenleiter einen Vorsprung bilden außerhalb der besagten Materialmasse (26), welche die Ultraschallwellen absorbiert, wobei diese Masse (26) einen freien Raum (27) zwischen seinem Frontteil (28) und der besagten gleichen Fläche (3) der Materialschicht (1) bildet.

9. Sonde nach einem der Ansprüche 7 oder 8,
dadurch gekennzeichnet, daß die besagte Materialmasse (26), welche die Ultraschallwellen absorbiert, sowie die besagten Ultraschallwellenleiter (9, 10) aus einem hitzebeständigen Material sind.

10. Sonde nach einem der Ansprüche 3 bis 9, dadurch gekennzeichnet, daß die besagten elektroakustischen Emitter-Wandler (5) und Empfänger-Wandler (6) im Innern des besagten Gehäuses (2₁) in der Nähe des Endes von diesem, das dem besagten Ende (21a), welches in Kontakt mit der besagten gleichen Fläche (3) der Materialschicht (1) gegenüberliegt, angeordnet sind.

11. Sonde nach einem der Ansprüche 1 bis 10,
dadurch gekennzeichnet, daß das besagte erste elektrische Signal (P) sinusförmig ist.

12. Sonde nach einem der Ansprüche 1 bis 11,
dadurch gekennzeichnet, daß sie mit Mitteln (7, 14) verbunden ist zum Zählen der Durchgänge durch 2 k π der besagten Phasenverschiebungabweichung (Δφ), wobei k eine ganze Zahl gleich 1, 2, 3..., (n-1), n ist.

**Claims**

1. Probe for measuring the variation (Δe) in the distance (e) separating the two faces (2,3) of a layer (1) of solid material by means of ultrasound travelling transversely through the said layer (1), including:
   - a transmitter electroacoustic transducer (5) capable of converting a first alternating electrical signal (P) into an ultrasonic wave of like fixed frequency whose amplitude varies in an alternating manner as a function of time, with said ultrasonic wave and the said first electrical signal being in a fixed phase relation;
   - first means of applying the said ultrasonic wave to the said layer of material (1);
   - a receiver electroacoustic transducer (6) capable of converting the ultrasonic wave passing through the said layer of material (1), into a second alternating electrical signal (S) in fixed phased relation with the said wave;
   - second means of applying to the said receiver electroacoustic transducer (6) the said ultrasonic wave having passed through the said layer of material, the said first and second means of application being arranged on the same side of the said layer of material (1);
   - first linking means (11) in order to be able to link the said transmitter electroacoustic transducer (5) to a generator (4) of the said first alternating electrical signal (P); and
   - second linking means (13) in order to be able to link the said receiver electroacoustic transducer (6) to means (7) capable of measuring continuously the variation of the phase shift of the said second electrical signal (S) with respect to the said first electrical signal (P),
   characterised in that:
   - the said first means of applying the ultrasonic wave are formed by a first rigid ultrasonic waveguide (9) arranged so that one (9a) of its ends is linled to the said transmitter electroacoustic transducer (5), whilst the other (9b) of its ends is free in order to be able to be brought into contact with an accessible face (3) of the said layer of material (1); and
   - the said second means of applying the ultrasonic wave are formed by a second rigid ultrasonic waveguide (10) arranged so that one (10a) of its ends is linked to the said receiver electroacoustic transducer (6), whilst the other (10b) of its ends is free in order to be able to be brought, like the free end (9b) of the said first waveguide (9) into contact with the said same accessible face (3) of the said layer of material (1).

2. Probe according to Claim 1, characterised in that it includes a box (21) enclosing the said transmitter (5) and receiver (6) electroacoustic transducers, as well as the said first and second rigid ultrasonic waveguides (9 and 10), the said first and second linking means (11 and 13) passing through the said box (21).

3. Probe according to Claim 2, characterised in that the free ends (9b,10b) of the said rigid ultrasonic waveguides (9,10), opposite the said transmitter (5) and receiver (6) electroacoustic transducers, are accessible from outside the said box (21), in order to be able to be coupled to the said same accessible face (3) of the said layer of material (1).

4. Probe according to Claim 3, characterised in that the coupling between the said free ends (9b,10b) of the said rigid waveguides and the said same accessible face (3) of the said layer of material (1) includes temporary sealings (24) of the said ends (9b,10b) to the said same accessible face (3).

5. Probe according to Claim 3, characterised in that the said box (21) includes an end (21a) capable of coming into contact with the said same accessible face (3) of the layer of material (1), when the said accessible free ends (9b,10b) of the said rigid ultrasonic waveguides (9,10) are coupled to the said same accessible face (3) and in that the said transmitter (5) and receiver (6) electroacoustic transducers are in contact with the said box (21).

6. Probe according to Claim 5, characterised in that it includes fixing means (23) for fixing the said end (21b) of the said box (21) to the said same accessible face (3) of the layer of material (1).

7. Probe according to one of Claims 1 to 6, characterised in that the said transmitter (5) and receiver (6) electroacoustic transducers, as well as the said first and second rigid ultrasonic waveguides (9 and 10) are embedded, inside the said box (21) within a mass (26) of material which absorbs ultrasonic waves.

8. Probe according to Claim 9, characterised in that said accessible free ends (9b,10b) of the said rigid ultrasonic waveguides project outside the said mass (26) of material which absorbs ultrasonic waves, this mass (26) allowing a free space (27) between its front (28) and the said same face (3) of the layer of material (1).

9. Probe according to one of Claims 7 or 8, characterised in that the said mass (26) of material which absorbs ultrasonic waves, as well as the said ultrasonic waveguides (9,10) are made of refractory materials.

10. Probe according to one of Claims 3 to 9, characterised in that the said transmitter (5) and receiver (6) electroacoustic transducers are arranged, inside the said box (21), near that end of the latter opposite the said end (21a) coming into contact with the said same face (3) of the layer of material (1).

11. Probe according to one of Claims 1 to 10, characterised in that the said first electrical signal (P) is sinusoidal.

12. Probe according to one of Claims 1 to 11, characterised in that in that it is associated with means (7,14) for counting crossings of the said variation in phase shift ($\Delta\phi$) through $2k\pi$, $\underline{k}$ being an integer equal to 1,2,3,..., (n-1), n.

Fig. 1

Fig. 3

Fig.2a

Fig.2b

Fig.2c